# EUROPEAN PATENT APPLICATION

(11) **EP 2 019 469 A2**
(43) Date of publication of application: **28.01.2009**
(21) Application number: 08008375.1
(22) Date of filing: 02.05.2008
(51) Int. Cl.: H02J 7/14, H02J 7/02

(54) **Dual mode portable charger with a wind power generator**

(30) Priority: 04.05.2007 US 744480
(71) Applicant: miniWIZ Sustainable Energy Development Ltd, a H.K. corporation, Shatin N.T. (HK)
(72) Inventor: Huang, Arthur C., Da-an District, Taipei, 106 (TW)
(74) Representative: Jones Day

(57) **Abstract**

A portable charger is disclosed including: a rechargeable battery module; a fluid energy converting device for converting kinetic energy of fluids flowing therethrough into electric power to charge the rechargeable battery module; a control circuit coupled to the rechargeable battery module; and a power output interface coupled to the control circuit for supplying power to an electronic device under the control of the control circuit when the power output interface is electrically connected to the electronic device.

## Description

The present invention relates to a portable charger according to the precharacterizing clause of claims 1 and 14.

Battery chargers typically include a cord that can be plugged into an electrical wall outlet to receive power. Accordingly, the battery chargers must be nearby a power, source such as an electrical wall outlet, in order to charge the batteries inside an electronic device. However, this is generally not available in outdoors.

In view of the foregoing, there is a need for a portable charger that can serve as a power source to charge or power the electronic device and can be easily carried by end users from location to location.

This in mind, the present invention aims at providing a portable charger that serves as a power source to charge or power an electronic device.

This is achieved by a portable charger according to claim 1 or 14. The dependent claims pertain to corresponding further development and improvements.

As will be seen more clearly from the detailed description following below, the claimed portable charger includes a fluid energy converting device to charge a rechargeable battery module of the dual mode portable charger.

In the following, the invention is further illustrated by way of example, taking reference to the accompanying drawings. Wherever possible, the same reference numbers will be used throughout the drawings to refer to the same or like parts.

FIG. 1 is a block diagram of a dual mode portable charger according to an exemplary embodiment;

FIG. 2 is a perspective view of the dual mode portable charger of FIG. 1 according to an exemplary embodiment;

FIG. 3 is a perspective view of a dual mode portable charger according to an exemplary embodiment; and

FIG. 4 is a lateral view of the dual mode portable charger of FIG. 3 according to an exemplary embodiment.

Mobile communication devices, MP3 player, digital camera, or other portable electronic devices are typically powered by one or more rechargeable batteries, such as nickel-cadmium, nickel-metal-hydride, lead-acid, and lithium-ion. When the re-chargeable batteries of an electronic device is in a low charge state, as end user can plug the electronic device into a battery charger, instead of powering down the electronic device and replacing the rechargeable batteries.

Battery chargers typically include a cord that can be plugged into an electrical wall outlet to receive power. Accordingly, the battery chargers must be nearby a power, source such as an electrical wall outlet, in order to charge the batteries inside the electronic device. However, this is generally not available in outdoors.

In view of the foregoing, there is a need for a portable charger that can serve as a power source to charge or power the electronic device and can be easily carried by end users from location to location.

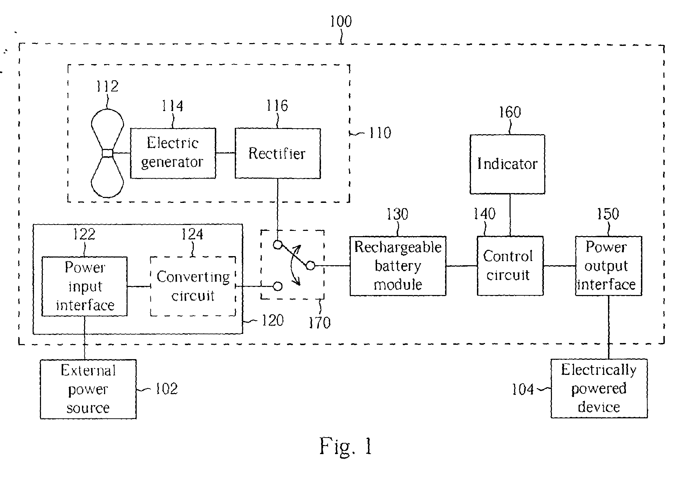

Referring to FIG. 1, which illustrates a block diagram of a dual mode portable charger 100 according to an exemplary embodiment. As shown in FIG. 1, the dual mode portable charger 100 includes a fluid energy converting device 110, a power receiving module 120, a rechargeable battery module 130, a control circuit 140, a power output interface 150, and an indicator 160. The rechargeable battery module 130 may include one or more rechargeable batteries. In one embodiment, the batteries within the rechargeable battery module 130 are batteries without memory effect. The rechargeable battery module 130 can produce current of sufficient amperage and before it must be recharged. Accordingly, the rechargeable battery module 130 can serve as a power source for charging an electrically powered device 104 when no external power source is available. The electrically powered device 104 could be a mobile phone, an audio/video player, a digital camera, or any other electronic device powered by batteries or other power source.

In the dual mode portable charger 100, the fluid energy converting device 110 converts kinetic energy of fluids flowing therethrough into electric power for charging the rechargeable battery module 130. The power receiving module 120 is arranged for receiving power from an external power source 102 when the power receiving module 120 is electrically connected to the external power source 102. In one embodiments, the external power source 102 is a computer capable of supplying power through an appropriately designed output terminal, such as a universal serial bus (USB) port. In another embodiment, the external power source 102 is an electrical socket such as wall socket. In practice, the external power source 102 could also be a fuel power generator, a solar power generator, a hydroelectric power generator, any green power generation system, or the like.

As shown in FIG. 1, the fluid energy converting device 110 includes a fan 112; an electric generator 114 coupled to the fan 112 for generating an alternating current (AC) when the fan 112 rotates; and a rectifier 116 coupled to the electric generator 114 for converting the AC generated by the electric generator 114 into a direct current (DC). In one embodiment, the fan 112 is driven by gases or liquids flowing therethrough. In another embodiment, the rectifier 116 is a diode bridge.

In one embodiment where the fan 112 is designed to be driven by air current flowing therethrough, the fluid energy converting device 110 serves as a wind power generator. In another embodiment where the fan 112 is designed to be driven by water flowing therethrough, the fluid energy converting device 110 functions as a mini hydroelectric power generator. As described in the foregoing, the fluid energy converting device 110 serves to recharge the rechargeable battery module 130.

In one embodiment, the power receiving module 120 includes a power input interface 122 and a converting circuit 124 as shown in FIG. 1. The power input interface 122 can be appropriately dimensioned and configured to fit into an output terminal of the external power source 102. For example, the power input interface 122 can include a plug that can be plugged into a wall outlet. In such application, the power input interface 122 further includes an AC to DC converter (not shown) for converting an alternating current (AC) received from the wall outlet into a direct current (DC). In this embodiment, the converting circuit 124 is designed for converting a voltage of the DC generated by the AC to DC converter to a predetermined value in order to charge the rechargeable battery module 130.

In one embodiment, the external power source 102 supplies DC signals to the power input interface 122, instead of AC signals. For example, if the external power source 102 is a computer with a USB port capable of supplying DC signals, the power input interface 122 can be designed to receive a direct current (DC) from the computer via the USB port. In one embodiment, the converting circuit 124 is designed for converting a voltage of the DC received by the power input interface 122 to a predetermined value for charging the rechargeable battery module 130. The power receiving module 120 recharges the rechargeable battery module 130.

As elaborated previously, the external power source 102 may be a wall socket, a fuel power generator, a solar power generator, a hydroelectric power generator, any green power generation system, or the like. The power input interface 122 could be configured to support one or more types of the external power source 102. For example, the power input interface 122 could include an adapter capable of converting a wide range of input voltages into a desired value.

In an alternative embodiment, the dual mode portable charger 100 further includes a switching device 170 for selectively coupling the rechargeable battery module 130 to the fluid energy converting device 110 or the power receiving module 120, for selecting one of the fluid energy converting device 110 and the power receiving module 120 for charging the rechargeable battery module 130. For example, the switching device 170 couples the rechargeable battery module 130 to the power receiving module 120 when the power receiving module 120 is electrically connected to the external power source 102. When the power receiving module 120 is not electrically connected to the external power source 102, the switching device 170 of this embodiment couples the rechargeable battery module 130 to the fluid energy converting device 110. The switching device 170 can be accordingly designed to operate under the control of the power receiving module 120 if a power detector is configured within the power receiving module 120. The switching device 170 can also be designed to operate under the control of end users.

In the dual mode portable charger 100, the control circuit 140 is arranged for controlling the power output interface 150 to supply a direct current (DC) with a predetermined voltage to the electrically powered device 104. In a preferred embodiment, the control circuit 140 is designed for stabilizing and optimizing the DC output of the power output interface 150. In practice, the power output interface 150 may be designed to have only one power output port for supplying power to a specific type of electronic device. Alternatively, the power output interface 150 may include two or more power output ports for respectively supplying power to different types of electronic device.

The indicator 160 of the dual mode portable charger 100 provides operating status of the dual mode portable charger 100. For example, the indicator 160 indicates whether the dual mode portable charger 100 is in a charging status or in a power supplying status.

A combination of the fluid energy converting device 110 and the power receiving module 120 within the dual mode portable charger 100 serves as merely an embodiment of the present invention rather than a restriction of the practical implementations. For example, the rechargeable battery module 130 can be charged by the fluid energy converting device 110 alone.

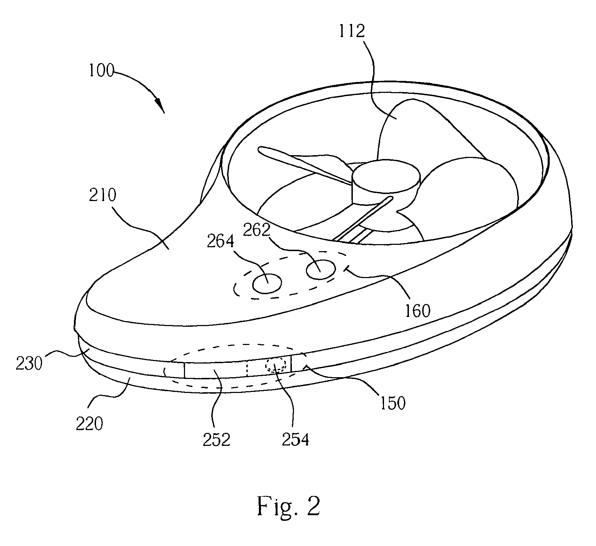

FIG. 2 presents a perspective view of the dual mode portable charger 100 according to an exemplary embodiment. The dual mode portable charger 100 includes a housing composed of an upper housing 210, a bottom housing 220, and a stripe part 230. Most of the components described previously are arranged inside the housing of the dual mode portable charger 100. The power input interface 122 (e.g., a plug) of the power receiving module 120 in this embodiment is disposed on the bottom surface of the bottom housing 220 and designed to be visibly hidden.

As illustrated, the fan 112 is disposed outside the housing of the dual mode portable charger 100, so that the fan 112 can be driven by fluids, such as water or air currents, that flow therethrough.

In the embodiment shown in FIG. 2, openings 252 and 254 on the stripe part 230 are two power output ports of the power output interface 150. As shown, the two power output ports 252 and 254 are of different shapes. Each of the two power output ports is dimensioned and configured to match a specific type of power line connector. When a suitable connector of a power line electrically connecting with an electronic device is plugged into one of the power output ports 252 and 254, the dual mode portable charger 100 supplies power to the electronic device (or charges batteries within the electronic device) through the connected power output port and the power line.

In one embodiment, an end user can hold the dual mode portable charger 100 when he/she works, jags, or even stands in a fixed position, and the fluid energy converting device 110 continuously generates electric power to charge the rechargeable battery module 130 as long as there are fluids (e.g., wind) flowing through and driving the fan 112. The dual mode portable charger 100 can be advantageously used as a portable power source for supplying power to other electronic devices carried by end users.

Additionally, in the embodiment show in FIG. 2, the indicator 160 includes two LEDs 262 and 264. The first LED 262 is arranged for indicating whether the dual mode portable charger 100 is being charged by the fluid energy converting device 110. The second LED 264 indicates whether the dual mode portable charger 100 is supplying power (or charging) an electronic device. The LEDs 262 and 264 can be analogously substituted with other devices capable of providing predetermined indications to end users.

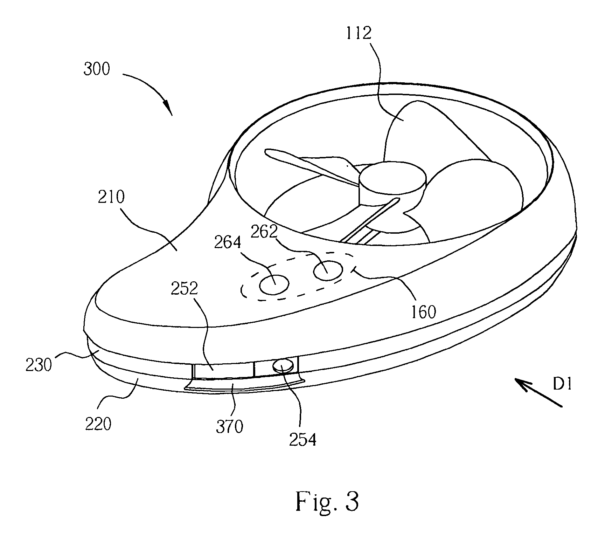

FIG. 3 illustrates a perspective view of a dual mode portable charger 300 according to an exemplary embodiment. Compared to the dual mode portable charger 100 described above, the dual mode portable charger 300 is further provided with a cover 370, which is foldablely disposed on the housing of the dual mode portable charger 300. When the cover 370 closes, it covers the power output ports 252 and 254 to provide dustproof functionality for the power output ports 252 and 254. In another embodiment, the cover 370 is designed such that the cover 370 and the housing of the dual mode portable charger 300 form a waterproof case when the cover 370 closes. In one embodiment, the cover 370 is made by a soft or flexible material, such as plastic, to enhance the dustproof or waterproof functionality.

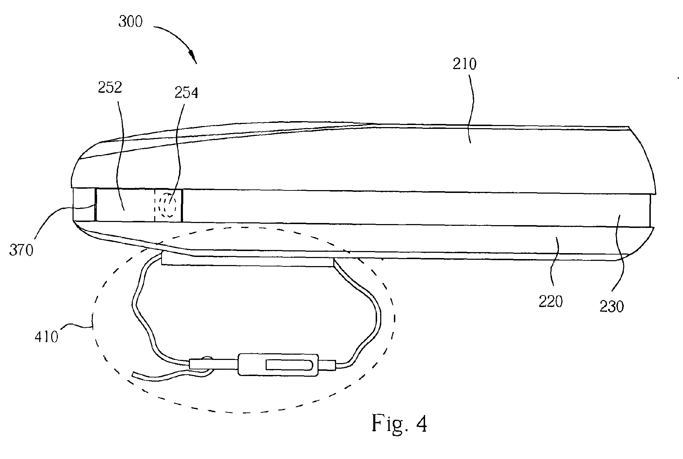

FIG. 4 illustrates a lateral view of the dual mode portable charger 300 with respect to a direction D1 according to an exemplary embodiment. A fastener 410 is removablely attached on the bottom housing 220 of the dual mode portable charger 300, allowing end users to fasten the dual mode portable charger 300 to an object, such as a part of human body. For example, an end user can put one forearm or one leg through the fastener 410 and then secure the fastener 410 so that the dual mode portable charger 300 is tied to the forearm or leg of the user instead of being held by the user. When the user works, jags, rides bicycle, stands in river for fishing, or even stands in a fixed position, the fluid energy converting device 110 can generate electric power to charge the rechargeable battery module 130, as long as there are fluids flowing through and driving the fan 112. The dual mode portable charger 300 can be advantageously used as a portable power source for supplying power to the user's electronic devices. The invention can be summarized as a dual mode portable charger including: a wind power generator; a power receiving module for receiving power from an external power source when electrically connected to the external power source; a rechargeable battery module; a control circuit coupled to the rechargeable battery module; and a power output interface coupled to the control circuit for supplying power to an electrically powered device under the control of the control circuit when the power output interface is electrically connected to the electrically powered device; wherein the rechargeable battery module is charged by the wind power generator or the power receiving module.

The invention can also be summarized as a portable charger including: a rechargeable battery module; a fluid energy converting device for converting kinetic energy of fluids flowing therethrough into electric power to charge the rechargeable battery module; a control circuit coupled to the rechargeable battery module; and a power output interface coupled to the control circuit for supplying power to an electronic device under the control of the control circuit when the power output interface is electrically connected to the electronic device.

For completeness, various aspects of the invention are set out in the following numbered clauses:

1. A dual mode portable charger, comprising:
a wind power generator;
a power receiving module for receiving power from an external power source when electrically connected to the external power source;
a rechargeable battery module;
a control circuit coupled to the rechargeable battery module; and
a power output interface coupled to the control circuit for supplying power to an electrically powered device under control of the control circuit when the power output interface is electrically connected to the electrically powered device;
wherein the rechargeable battery module is charged by the wind power generator.

2. The dual mode portable charger of clause 1, wherein the wind power generator comprises:
a fan;
an electric generator coupled to the fan for generating an alternating current (AC) when the fan rotates; and
a rectifier coupled to the electric generator for converting the AC generated by the electric generator into a direct current (DC).

3. The dual mode portable charger of clause 2, wherein the rectifier comprises a diode bridge.

4. The dual mode portable charger of clause 1, wherein the power receiving module comprises:
a power input interface for receiving power from the external power source to charge the rechargeable battery module.

5. The dual mode portable charger of clause 4, wherein the power input interface comprises:
an AC to DC converter for converting an alternating current (AC) into a direct current (DC).

6. The dual mode portable charger of clause 5, wherein the power receiving module further comprises:
a converting circuit, coupled between the power input interface and the rechargeable battery module, for converting a voltage of the DC from the AC to DC converter to a predetermined value.

7. The dual mode portable charger of clause 4, wherein the power input interface receives a direct current (DC) from the external power source, and the power receiving module further comprises:
a converting circuit, coupled between the power input interface and the rechargeable battery module, for converting a voltage of the DC received by the power input interface to a predetermined value.

8. The dual mode portable charger of clause 1, further comprising:
a switching device coupled to the rechargeable battery module for selectively coupling the rechargeable battery module to the wind power generator or the power receiving module.

9. The dual mode portable charger of clause 8, wherein the switching device couples the rechargeable battery module to the power receiving module when the power receiving module is electrically connected to the external power source.

10. The dual mode portable charger of clause 8, wherein the switching device couples the rechargeable battery module to the wind power generator when the power receiving module is not electrically connected to any external power source.

11. The dual mode portable charger of clause 8, wherein the switching device is controlled by the power receiving module.

12. The dual mode portable charger of clause 1, further comprising:
a housing; and
a cover foldablely disposed on the housing for covering at least one opening of the power output interface.

13. The dual mode portable charger of clause 1, further comprising:
an indicator for indicating an operating status of the dual mode portable charger.

14. The dual mode portable charger of clause 1, further comprising:
a fastener removablely attached on a housing of the dual mode portable charge for fastening the dual mode portable charger to an object.

15. The dual mode portable charger of clause 1, wherein the external power source is selected from a group consisting of an electronic device, an electrical socket, a fuel power generator, a solar power generator, a hydroelectric power generator, and a green power generation system.

16. A portable charger, comprising:
a rechargeable battery module;
a fluid energy converting device for converting kinetic energy of fluids flowing therethrough into electric power to charge the rechargeable battery module;
a control circuit coupled to the rechargeable battery module; and
a power output interface coupled to the control circuit for supplying power to an electronic device under the control of the control circuit when the power output interface is electrically connected to the electronic device.

17. The portable charger of clause 16, wherein the fluid energy converting device comprises:
a fan driven by gases or liquids flowing therethrough;
an electric generator coupled to the fan for generating an alternating current (AC) when the fan rotates; and
a rectifier coupled to the electric generator for converting the AC generated by the electric generator into a direct current (DC).

18. The portable charger of clause 16, further comprising:
a housing provided with a foldable cover;
wherein the foldable cover covers openings of the power output interface and cooperates with the housing to form a waterproofing case when the foldable cover closes.

19. The portable charger of clause 16, further comprising:
a power receiving module for receiving power from an external power source when electrically connected to the external power source to charge the rechargeable battery module.

20. The dual mode portable charger of clause 19, wherein the external power source is selected from a group consisting of an electronic device, an electrical socket, a fuel power generator, a solar power generator, a hydroelectric power generator, and a green power generation system.

21. The portable charger of clause 19, further comprising:
a switching device coupled to the rechargeable battery module for selecting one of the fluid energy converting device and the power receiving module to charge the rechargeable battery module.

22. The portable charger of clause 16, wherein the control circuit controls the power output interface to supply a direct current (DC) with a predetermined voltage to the electronic device.

23. A dual mode portable charger, comprising:
a wind power generator for generating electric power;
a power receiving module for receiving power from an external power source when electrically connected to the external power source;
a rechargeable battery module;
a control circuit coupled to the rechargeable battery module; and
a power output interface coupled to the control circuit for supplying power to an electrically powered device under control of the control circuit when the power output interface is electrically connected to the electrically powered device;
wherein the rechargeable battery module is charged by the power receiving module.

24. The dual mode portable charger of clause 23, wherein the wind power generator comprises:
a fan;
an electric generator coupled to the fan for generating an alternating current (AC) when the fan rotates; and
a rectifier coupled to the electric generator for converting the AC generated by the electric generator into a direct current (DC).

25. The dual mode portable charger of clause 24, wherein the rectifier comprises a diode bridge.

26. The dual mode portable charger of clause 23, wherein the power receiving module comprises:
a power input interface for receiving power from the external power source to charge the rechargeable battery module.

27. The dual mode portable charger of clause 26, wherein the power input interface comprises:
an AC to DC converter for converting an alternating current (AC) into a direct current (DC).

28. The dual mode portable charger of clause 27, wherein the power receiving module further comprises:
a converting circuit, coupled between the power input interface and the rechargeable battery module, for converting a voltage of the DC from the AC to DC converter to a predetermined value.

29. The dual mode portable charger of clause 26, wherein the power input interface receives a direct current (DC) from the external power source, and the power receiving module further comprises:
a converting circuit, coupled between the power input interface and the rechargeable battery module, for converting a voltage of the DC received by the power input interface to a predetermined value.

30. The dual mode portable charger of clause 23, further comprising:
a switching device coupled to the rechargeable battery module for selectively coupling the rechargeable battery module to the wind power generator or the power receiving module.

31. The dual mode portable charger of clause 30, wherein the switching device couples the rechargeable battery module to the power receiving module when the power receiving module is electrically connected to the external power source.

32. The dual mode portable charger of clause 30, wherein the switching device couples the rechargeable battery module to the wind power generator when the power receiving module is not electrically connected to any external power source.

33. The dual mode portable charger of clause 30, wherein the switching device is controlled by the power receiving module.

34. The dual mode portable charger of clause 23, further comprising:
a housing; and
a cover foldablely disposed on the housing for covering at least one opening of the power output interface.

35. The dual mode portable charger of clause 23, further comprising:
an indicator for indicating an operating status of the dual mode portable charger.

36. The dual mode portable charger of clause 23, further comprising:
a fastener removablely attached on a housing of the dual mode portable charge for fastening the dual mode portable charger to an object.

37. The dual mode portable charger of clause 23, wherein the external power source is selected from a group consisting of an electronic device, an electrical socket, a fuel power generator, a solar power generator, a hydroelectric power generator, and a green power generation system.

All combinations and sub-combinations of the above-described features also belong to the invention.

## Claims

1. A dual mode portable charger (100, 300), **characterized by**:
a wind power generator (110);
a power receiving module (120) for receiving power from an external power source (102) when electrically connected to the external power source (102);
a rechargeable battery module (130);
a control circuit (140) coupled to the rechargeable battery module (130); and
a power output interface (150) coupled to the control circuit (140) for supplying power to an electrically powered device (104) under control of the control circuit (140) when the power output interface (150) is electrically connected to the electrically powered device (104);
wherein the rechargeable battery module (130) is charged by the wind power generator (110).

2. The dual mode portable charger (100, 300) of claim 1, **characterized in that** the wind power generator (110) comprises:
a fan (112);
an electric generator (114) coupled to the fan (112) for generating an alternating current (AC) when the fan (112) rotates; and
a rectifier (116) coupled to the electric generator (114) for converting the AC generated by the electric generator into a direct current (DC).

3. The dual mode portable charger (100, 300) of claim 1, **characterized in that** the power receiving module (120) comprises:
a power input interface (122) for receiving power from the external power source (102) to charge the rechargeable battery module (130).

4. The dual mode portable charger (100, 300) of claim 3, **characterized in that** the power input interface (122) comprises:
an AC to DC converter for converting an alternating current (AC) into a direct current (DC).

5. The dual mode portable charger (100, 300) of claim 4, **characterized in that** the power receiving module (120) further comprises:
a converting circuit (124), coupled between the power input interface (122) and the rechargeable battery module (130), for converting a voltage of the DC from the AC to DC converter to a predetermined value.

6. The dual mode portable charger (100, 300) of claim 3, **characterized in that** the power input interface (122) receives a direct current (DC) from the external power source (102), and the power receiving module (120) further comprises:
a converting circuit (124), coupled between the power input interface (122) and the rechargeable battery module (130), for converting a voltage of the DC received by the power input interface (122) to a predetermined value.

7. The dual mode portable charger (100, 300) of claim 1, **characterized by**:
a switching device (170) coupled to the rechargeable battery module (130) for selectively coupling the rechargeable battery module (130) to the wind power generator (110) or the power receiving module (120).

8. The dual mode portable charger (100, 300) of claim 7, **characterized in that** the switching device (170) couples the rechargeable battery module (130) to the power receiving module (120) when the power receiving module (120) is electrically connected to the external power source (102).

9. The dual mode portable charger (100, 300) of claim 7, **characterized in that** the switching device (170) couples the rechargeable battery module (130) to the wind power generator (110) when the power receiving module (120) is not electrically connected to any external power source (102).

10. The dual mode portable charger (100, 300) of claim 7, **characterized in that** the switching device (170) is controlled by the power receiving module (120).

11. The dual mode portable charger (100, 300) of claim 1, **characterized by**:
a housing (210, 220, 230); and
a cover (370) foldablely disposed on the housing (210, 220, 230) for covering at least one opening (252, 254) of the power output interface (150).

12. The dual mode portable charger (100, 300) of claim 1, **characterized by**:
a fastener (410) removablely attached on a housing (210, 220, 230) of the dual mode portable charge (100, 300) for fastening the dual mode portable charger (100, 300) to an object.

13. The dual mode portable charger (100, 300) of claim 1, **characterized in that** the external power source (102) is selected from a group consisting of an electronic device, an electrical socket, a fuel power generator, a solar power generator, a hydroelectric power generator, and a green power generation system.

14. A portable charger (100, 300), **characterized by**:
a rechargeable battery module (130);
a fluid energy converting device (110) for converting kinetic energy of fluids flowing therethrough into electric power to charge the rechargeable battery module (130);
a control circuit (140) coupled to the rechargeable battery module (130); and
a power output interface (150) coupled to the control circuit (140) for supplying power to an electronic device (104) under the control of the control circuit (140) when the power output interface (150) is electrically connected to the electronic device (104).

15. The portable charger (100, 300) of claim 14, **characterized in that** the fluid energy converting device (110) comprises:
a fan (112) driven by gases or liquids flowing therethrough;
an electric generator (114) coupled to the fan (112) for generating an alternating current (AC) when the fan (112) rotates; and
a rectifier (116) coupled to the electric generator (114) for converting the AC generated by the electric generator (114) into a direct current (DC).

16. The portable charger (100, 300) of claim 14, **characterized by**:
a housing (210, 220, 230) provided with a foldable cover (370);
wherein the foldable cover (370) covers openings (252, 254) of the power output interface (150) and cooperates with the housing (210, 220, 230) to form a waterproofing case when the foldable cover (370) closes.

17. The portable charger (100, 300) of claim 14, **characterized by**:
a power receiving module (120) for receiving power from an external power source (102) when electrically connected to the external power source (102) to charge the rechargeable battery module (130).

18. The portable charger (100, 300) of claim 17, **characterized in that** the external power source (102) is selected from a group consisting of an electronic device, an electrical socket, a fuel power generator, a solar power generator, a hydroelectric power generator, and a green power generation system.

19. The portable charger (100, 300) of claim 17, **characterized by**:
a switching device (170) coupled to the rechargeable battery module (130) for selecting one of the fluid energy converting device (110) and the power receiving module (120) to charge the rechargeable battery module (130).

20. The portable charger (100, 300) of claim 14, **characterized in that** the control circuit (140) controls the power output interface (150) to supply a direct current (DC) with a predetermined voltage to the electronic device (104).
